(19) Europäisches Patentamt
European Patent Office
Office européen des brevets

(11) **EP 4 697 840 A1**

(12) **EUROPEAN PATENT APPLICATION**
published in accordance with Art. 153(4) EPC

(43) Date of publication:
**18.02.2026 Bulletin 2026/08**

(21) Application number: **23932530.1**

(22) Date of filing: **14.04.2023**

(51) International Patent Classification (IPC):
**H04W 72/40** $^{(2023.01)}$   **H04W 72/04** $^{(2023.01)}$

(52) Cooperative Patent Classification (CPC):
**H04W 72/04; H04W 72/40**

(86) International application number:
**PCT/CN2023/088529**

(87) International publication number:
**WO 2024/212249 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHANG, Shichang**
  **Dongguan, Guangdong 523860 (CN)**
• **MA, Teng**
  **Dongguan, Guangdong 523860 (CN)**
• **WANG, Hao**
  **Dongguan, Guangdong 523860 (CN)**

(74) Representative: **RGTH**
**Patentanwälte PartGmbB**
**Neuer Wall 10**
**20354 Hamburg (DE)**

(54) **SIDELINK COMMUNICATION METHOD AND APPARATUS**

(57)    The present application provides a sidelink communication method and apparatus. The method comprises: a terminal device sends or receives a first sidelink channel/signal, wherein bandwidth of a frequency domain resource occupied by the terminal device for sending or receiving the first sidelink channel/signal is a first bandwidth, the bandwidth of the terminal device receiving a radio frequency signal is a second bandwidth, the first bandwidth is greater than or equal to X, the second bandwidth is greater than or equal to Y, both X and Y are positive numbers, and X is less than or equal to Y. By reducing the bandwidth of a frequency domain resource occupied by a terminal device in a sidelink communications system for sending or receiving a sidelink channel/signal and the bandwidth of the terminal device receiving a radio frequency signal, and enabling the bandwidth of a frequency domain resource occupied by the terminal device for sending or receiving a sidelink channel/signal to be less than or equal to the bandwidth of the terminal device receiving a radio frequency signal, the complexity and cost of the terminal device are reduced.

**1200**

S1210

A terminal device transmits or receives a first sidelink channel/signal

FIG. 12

EP 4 697 840 A1

## Description

## TECHNICAL FIELD

This application relates to the field of communications technologies, and more specifically, to a sidelink communication method and apparatus.

## BACKGROUND

Currently, in a sidelink communications system, a terminal device supports a same reception bandwidth and a same transmission bandwidth, which leads to relatively high complexity and cost of the terminal device. How to reduce transmission and/or reception bandwidth of a terminal device in a sidelink communications system is an urgent problem to be resolved.

## SUMMARY

This application provides a sidelink communication method and apparatus, and the following describes various aspects involved in this application.

According to a first aspect, a sidelink communication method is provided, where the method includes: transmitting or receiving, by a terminal device, a first sidelink channel/signal, where a bandwidth of a frequency domain resource occupied by the terminal device to transmit or receive the first sidelink channel/signal is a first bandwidth, a bandwidth for the terminal device to receive a radio frequency signal is a second bandwidth, the first bandwidth is greater than or equal to X, the second bandwidth is greater than or equal to Y, both the X and the Y are positive numbers, and the X is less than or equal to the Y.

According to a second aspect, a sidelink communication apparatus is provided, where the apparatus includes: a transceiver unit, configured to transmit or receive a first sidelink channel/signal, where a bandwidth of a frequency domain resource occupied by the terminal device to transmit or receive the first sidelink channel/signal is a first bandwidth, a bandwidth for the terminal device to receive a radio frequency signal is a second bandwidth, the first bandwidth is greater than or equal to X, the second bandwidth is greater than or equal to Y, both the X and the Y are positive numbers, and the X is less than or equal to Y.

According to a third aspect, a terminal device is provided, and the terminal device includes a processor, a memory, and a communications interface. The memory is configured to store one or more computer programs, and the processor is configured to invoke the computer program in the memory to cause the terminal device to execute some or all of the steps in the method according to the first aspect.

According to a fourth aspect, an embodiment of this application provides a chip, where the chip includes a memory and a processor, and the processor may invoke a computer program from the memory and run the computer program, to implement some or all of the steps described in the method according to the first aspect.

According to a fifth aspect, an embodiment of this application provides a computer-readable storage medium, where the computer-readable storage medium stores a computer program, and the computer program causes a terminal device to execute some or all of the steps in the method according to the first aspect.

According to a sixth aspect, an embodiment of this application provides a computer program product. The computer program product includes a non-transitory computer-readable storage medium storing a computer program, and the computer program is operable to cause a terminal device to execute some or all of the steps of the method according to the first aspect. In some implementations, the computer program product may be a software installation package.

According to a seventh aspect, an embodiment of this application provides a chip, where the chip includes a memory and a processor, and the processor may invoke a computer program from the memory and run the computer program, to implement some or all of the steps described in the method according to the first aspect.

According to embodiments of this application, a bandwidth of a frequency domain resource occupied by a terminal device to transmit or receive a sidelink channel/signal and a bandwidth for the terminal device to receive a radio frequency signal in a sidelink communications system are reduced, and the bandwidth of the frequency domain resource occupied by the terminal device for transmitting or receiving the sidelink channel/signal is less than or equal to the bandwidth for the terminal device to receive the radio frequency signal, so as to reduce complexity and costs of the terminal device.

## BRIEF DESCRIPTION OF DRAWINGS

FIG. 1 shows a wireless communications system to which embodiments of this application are applicable.

FIG. 2 is a schematic diagram of a slot structure in NR-V2X.

FIG. 3 is a schematic diagram of a sidelink slot structure in NR-V2X.

FIG. 4 is a schematic diagram of a time domain position of a DMRS symbol in a sidelink slot structure.

FIG. 5 is a schematic diagram of a PSSCH DMRS frequency domain position.

FIG. 6 is a schematic diagram of a resource pool between a PSCCH and a PSSCH.

FIG. 7 is a schematic diagram of a typical subframe of an NR system.

FIG. 8 is an example diagram in which an NR-V2X time domain resource is determined.

FIG. 9 is a schematic diagram of an interleaved resource block.

FIG. 10 is a schematic structural diagram of a frame based on an interleaved resource block.

FIG. 11 is a schematic diagram of an RB set.

FIG. 12 is a schematic flowchart of a sidelink communication method according to an embodiment of this application.

FIG. 13 is an example diagram of a use case of one IRB resource according to an embodiment of this application.

FIG. 14 is a schematic diagram of a sidelink communication apparatus according to an embodiment of this application.

FIG. 15 is a schematic structural diagram of another sidelink communication apparatus according to an embodiment of this application.

## DESCRIPTION OF EMBODIMENTS

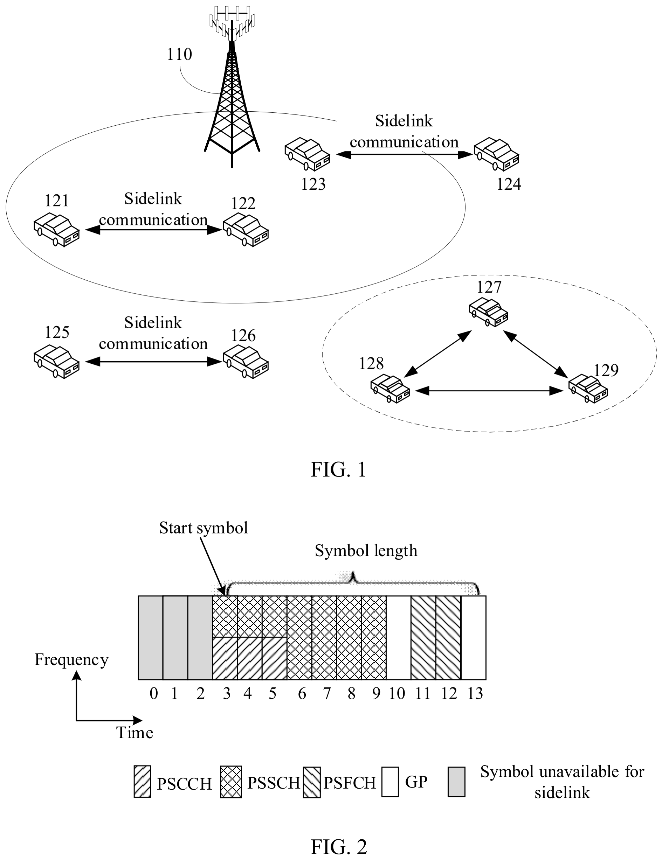

Technical solutions in this application are described below with reference to the accompanying drawings. For ease of understanding, the terms and communication processes involved in this application are first described below with reference to FIG. 1 to FIG. 11.

FIG. 1 shows a wireless communications system 100 to which embodiments of this application are applicable. The wireless communications system 100 may include a network device 110 and terminals 121 to 129. The network device 110 may provide communication coverage for a specific geographic area, and may communicate with a terminal located in the coverage area.

In some implementations, terminals may communicate with each other over a sidelink (sidelink, SL). Sidelink communication may also be referred to as proximity services (proximity services, ProSe) communication, unilateral communication, side link communication, device-to-device (device to device, D2D) communication, or direct link communication.

In other words, sidelink data is transmitted between terminals over a sidelink. The sidelink data may include data signalling and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, a physical sidelink feedback channel (physical sidelink feedback channel, PSFCH), or a sidelink synchronization signal block (Sidelink synchronization signal block, S-SSB). The S-SSB includes a sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH).

With reference to FIG. 1, the following describes several common sidelink communication scenarios. Sidelink communication may be classified into three scenarios depending on whether terminals on a sidelink are located in coverage of the network device. In a scenario 1, the terminals perform sidelink communication within the coverage of the network device. In a scenario 2, some of the terminals perform sidelink communication within the coverage of the network device. In a scenario 3, the terminals perform sidelink communication outside the coverage of the network device.

As shown in FIG. 1, in the scenario 1, terminals 121 and 122 may communicate with each other over a sidelink, and the terminals 121 and 122 are both within the coverage of the network device 110. In other words, the terminals 121 and 122 are both within coverage of a same network device 110. In this scenario, the network device 110 may transmit configuration signalling to the terminals 121 and 122, and accordingly, the terminals 121 and 122 communicate with each other over the sidelink based on the configuration signalling.

As shown in FIG. 1, in the scenario 2, terminals 123 and 124 may communicate with each other over a sidelink, the terminal 123 is within the coverage of the network device 110, and the terminal 124 is outside the coverage of the network device 110. In this scenario, the terminal 123 receives configuration information from the network device 110, and performs communication over the sidelink based on a configuration of configuration signalling. However, since the terminal 124 is outside the coverage of the network device 110, the terminal 124 cannot receive the configuration information from the network device 110. In this case, the terminal 124 may obtain a configuration of sidelink communication based on pre-configured (pre-configuration) configuration information and/or configuration information transmitted by the terminal 123 within the coverage, so that the terminal 124 communicates with the terminal 123 over the sidelink based on the obtained configuration.

In some cases, the terminal 123 may transmit the configuration information to the terminal 124 through a sidelink broadcast channel (physical sidelink broadcast channel, PSBCH), to configure the terminal 124 to perform communication over the sidelink.

As shown in FIG. 1, in the scenario 3, terminals 125 to 129 are all outside the coverage of the network device 110 and cannot communicate with the network device 110. In this case, all the terminals may perform sidelink communication based on pre-configuration information.

In some cases, the terminals 127 to 129 outside the coverage of the network device may form a communication cluster, and the terminals 127 to 129 in the communication cluster may communicate with each other. In addition, the terminal 127 in the communication cluster may serve as a central control node, which is also referred to as a cluster header (cluster header, CH). Correspondingly, the other terminals in the communication cluster may be referred to as "cluster members".

The terminal 127, as the CH, may have one or more of the following functions: being responsible for establishment of the communication cluster; joining and leaving of the cluster members; resource coordination, assignment of sidelink transmission resources for the cluster members, and receiving of sidelink feedback information from the cluster members; resource coordination with another communication cluster; or the like.

It should be noted that FIG. 1 exemplarily shows one network device and a plurality of terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity, which is not limited in embodiments of this application.

It should be understood that the technical solutions in the embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may be further applied to a future communications system, such as a $6^{th}$ generation mobile communications system or a satellite communications system.

The terminal in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides sidelink data between UEs in V2X, D2D, or the like. For example, a cellular phone and a vehicle communicate with each other by using sidelink data. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in the network device and the terminal device operate is not limited.

It should be understood that all or some of functions of the communications device in this application may alternatively be implemented by software functions running on hardware, or by virtualization functions instantiated on a platform (for example, a cloud platform).

**Slot structure in NR-V2X**

In NR-V2X, a PSSCH and a PSCCH associated with the PSSCH may be transmitted in a same slot, and the PSCCH may occupy two or three time domain symbols. Time domain resources in NR-V2X are allocated at a slot granularity. Generally, a starting point of and a length of time domain symbols used for sidelink transmission in one slot may be configured by using parameters such as a start symbol (sl-startSLsymbols) and a symbol length (sl-lengthSLsymbols). The last symbol in such symbols may be used as a GP (guard period), and only the remaining time domain symbols can be used for the PSSCH and the PSCCH. However, if a PSFCH transmission resource is configured in one slot, the PSSCH and the PSCCH cannot occupy a time domain symbol used for PSFCH transmission, or automatic gain control (automatic gain control, AGC) and GP symbols located before the symbol.

If sl-StartSymbol=3 and sl-LengthSymbols=11 are configured, a slot structure in this configuration is shown in FIG. 2.

Referring to FIG. 2, sl-StartSymbol = 3, and sl-LengthSymbols = 11, that is, 11 time domain symbols starting from the symbol index 3 in the slot may be used for sidelink transmission.

If there is a PSFCH transmission resource in the slot, and the PSFCH occupies a symbol 11 and a symbol 12 (the symbol 11 may be used as an AGC symbol of the PSFCH) and a symbol 10 and a symbol 13 may be used as GPs, then time domain symbols available for PSSCH transmission are symbols 3 to 9. In addition, the PSCCH may occupy three time domain symbols, namely, the symbol 3, the symbol 4, and the symbol 5, and the symbol 3 is generally used as an AGC symbol.

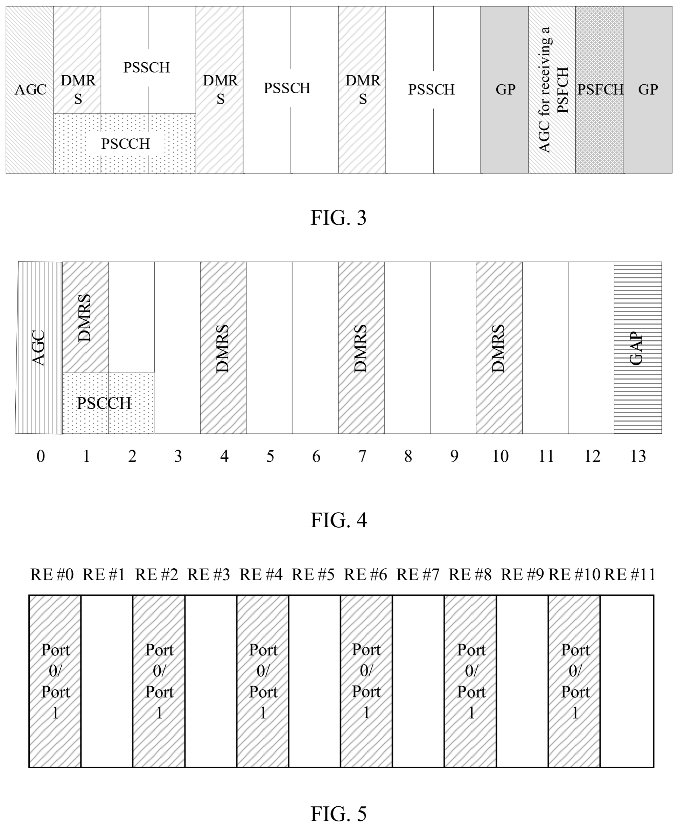

FIG. 3 is a schematic diagram of a sidelink slot structure in NR-V2X. As described above, there may also be a PSFCH in one sidelink slot in NR-V2X in addition to a PSCCH and a PSSCH. Referring to FIG. 3, the 1st OFDM symbol in one slot may be reserved for AGC. On the AGC symbol, a terminal device may copy information transmitted on the 2nd symbol. In addition, the last symbol in one slot may be used for transmit/receive switching, and the symbol may be used by the terminal device to switch from a transmit (or receive) state to a receive (or transmit) state. In the remaining OFDM symbols, the PSCCH may occupy two or three OFDM symbols starting from the 2nd sidelink symbol. In frequency domain, a quantity of physical resource blocks (physical resource blocks, PRBs) occupied by the PSCCH may fall within a subband range of one PSSCH. If a quantity of PRBs occupied by the PSCCH is less than that of one sub-channel of the PSSCH, or a frequency domain resource of the PSSCH includes a plurality of sub-channels, on the OFDM symbols on which the PSCCH is located, the PSCCH may be frequency-division-multiplexed with the PSSCH.

Referring to design in an NR Uu interface, a DMRS of the PSSCH in NR-V2X uses multiple time domain PSSCH DMRS patterns. In one resource pool, a quantity of available DMRS patterns is related to a quantity of PSSCH symbols in the resource pool. For specific quantities of PSSCH symbols (including the 1st AGC symbol) and PSCCH symbols, an available DMRS pattern and a position of each DMRS symbol in the pattern are shown in Table 1.

Table 1

| Quantity of PSSCH symbols (including the 1st AGC symbol) | Position of a DMRS symbol (relative to the position of the 1st AGC symbol) | | | | | |
| --- | --- | --- | --- | --- | --- | --- |
| | Quantity of PSCCH symbols being 2 | | | Quantity of PSCCH symbols being 3 | | |
| | Quantity of DMRS symbols | | | Quantity of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1,4,7 | | 4, 8 | 1,4,7 | |
| 10 | 3, 8 | 1,4,7 | | 4, 8 | 1,4,7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

FIG. 4 is a schematic diagram of a time domain position of a DMRS symbol in a sidelink slot structure. In FIG. 4, a quantity of PSSCH symbols is 13, a quantity of PSCCH symbols is 2, and a quantity of DMRS symbols is 4.

If a plurality of time domain DMRS patterns are configured in a resource pool, a time domain DMRS pattern to be specifically used may be selected by a transmitting terminal device, and is indicated in first-stage sidelink control information (sidelink control information, SCI). In this design, a high-speed moving terminal device is allowed to select a high-density DMRS pattern, thereby ensuring accuracy of channel estimation; and a low-speed moving terminal device may use a low-density DMRS pattern, thereby improving spectral efficiency.

A generation manner of a PSSCH DMRS sequence is substantially the same as that of a PSCCH DMRS sequence. A difference between the two generation manners lies in that, in an initialization formula $c_{init}$ of a pseudo random sequence c(m), $N_{ID} = \sum_{i=0}^{L-1} P_i \times 2^{L-1-i}$, where $P_i$ is ith bit CRC of a PSCCH for scheduling the PSSCH, and L is a quantity of bits of PSCCH CRC, where L = 24.

Two frequency domain DMRS patterns are supported in a physical downlink shared channel (physical downlink shared channel, PDSCH) and a physical uplink shared signal (physical uplink shared channel, PUSCH) in NR, that is, a DMRS frequency domain type 1 and a DMRS frequency domain type 2. For each frequency domain type, there are two different types: a single-symbol DMRS type and a double-symbol DMRS type. A single-symbol DMRS frequency domain type 1 supports four DMRS ports, and a single-symbol DMRS frequency domain type 2 may support six DMRS ports. In a case of the double-symbol DMRS frequency domain type, a quantity of supported ports is doubled. However, in NR-V2X, because a PSSCH may only be required to support a maximum of two DMRS ports, only the single-symbol DMRS frequency domain type 1 is supported. FIG. 5 is a schematic diagram of a PSSCH DMRS frequency domain position.

**Determining of a frequency domain resource in NR-V2X**

Similar to that in LTE-V2X, frequency domain resources in an NR-V2X resource pool may be consecutive, and the frequency domain resources are assigned at a sub-channel granularity. In NR-V2X, a quantity of PRBs included in one sub-channel may be {10,12,15,20,50,75,100}, where a smallest sub-channel size may be 10 PRBs and is far greater than a smallest sub-channel size 4 PRBs in LTE-V2X. This is mainly because a frequency domain resource of a PSCCH in NR-V2X is located in the 1st sub-channel of a PSSCH associated with the PSCCH, the frequency domain resource of the PSCCH is less than or equal to a size of one sub-channel of the PSSCH, and a time domain resource of the PSCCH occupies two or three OFDM symbols. If a sub-channel size is configured to be relatively small, available resources of the PSCCH are few, a code rate is increased, and performance for detecting the PSCCH is reduced. In NR-V2X, a sub-channel size of a PSSCH and a size of a frequency domain resource of a PSCCH are independently configured. However, it should be ensured that the size of the frequency domain resource of the PSCCH is less than or equal to the sub-channel size of the PSSCH.

Resource pool configuration information in NR-V2X may include parameters such as a sub-channel size (sl-SubchannelSize), a sub-channel quantity (sl-NumSubchannel), a sub-channel start resource block (resource block, RB) index (sl-StartRB-Subchannel), a PRB quantity (sl-RB-Number), and a PSCCH frequency domain resource indicator (sl-FreqResourcePSCCH). These configuration parameters may be used to determine frequency domain resources of a PSCCH and PSSCH resource pool.

The sub-channel size may be used to indicate a quantity of consecutive PRBs included in one sub-channel in a resource pool, and a value range thereof may be {10, 12, 15, 20, 50, 75, 100} PRBs. The sub-channel quantity may be used to indicate a quantity of sub-channels included in the resource pool. The sub-channel start RB index may be used to indicate a start PRB index of the 1st sub-channel in the resource pool. The PRB quantity may be used to indicate a quantity of consecutive PRBs included in the resource pool. The PSCCH frequency domain resource indicator may be used to indicate a frequency domain resource size of a PSCCH, and a value range thereof may be {10, 12, 15, 20, 25} PRBs.

When a terminal device determines a resource pool used for PSSCH transmission or reception, a frequency domain resource included in the resource pool is sl-NumSubchannel consecutive sub-channels starting from a PRB indicated by sl-StartRB-Subchannel. If a quantity of PRBs included in the sl-NumSubchannel consecutive sub-channels is finally less than a PRB quantity indicated by sl-RB-Number, remaining PRBs cannot be used for PSSCH transmission or reception.

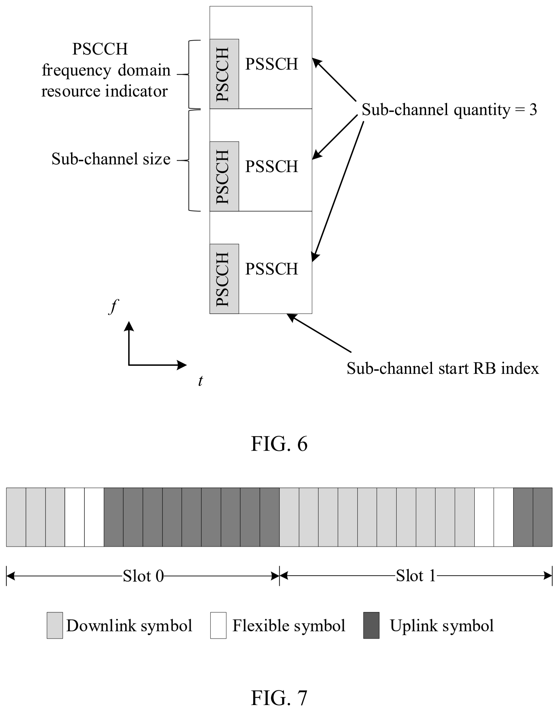

In NR-V2X, a frequency domain start position of the PSCCH may be aligned with a frequency domain start position of the 1st sub-channel of the PSSCH associated with the PSCCH. Therefore, a start position of each sub-channel of the PSSCH is a possible frequency domain start position of the PSCCH. Frequency domain ranges of the PSCCH and PSSCH resource pool may be determined based on the foregoing configuration parameters. FIG. 6 is a schematic diagram of a resource pool between a PSCCH and a PSSCH.

In NR-V2X, a PSCCH may be used to carry sidelink control information related to resource listening. For example, the sidelink control information carried by the PSCCH may include: a priority of scheduled transmission; frequency domain resource allocation; which may be used to indicate a quantity of frequency domain resources of a PSSCH in a current slot as scheduled by a PSCCH, and a quantity of frequency domain resources of a maximum of two reserved retransmission resources and start locations thereof; time domain resource allocation, which indicates time domain locations of a maximum of two retransmission resources; a reference signal pattern of a PSSCH; a second-stage SCI format; a second-stage SCI code rate offset; a quantity of PSSCH DMRS ports; a modulation and coding scheme (modulation and coding scheme, MCS); an MCS table indication; a PSFCH symbol quantity; a resource reservation period for reserving a resource used for transmitting another transport block (transport block, TB) in a next period, where if resource reservation between TBs is not activated in the resource pool configuration, an information bit field of the resource reservation period does not exist; and if no resource reservation between TB is activated in a resource pool configuration, the information bit field is absent; and reserved bits, usually including 2 bits to 4 bits, where a specific quantity of bits may be configured or pre-configured by a network device.

A PSCCH and a scheduled PSSCH are always transmitted in one slot, and a start position of a PRB occupied by the PSCCH is a start position of the 1st sub-channel of the scheduled PSSCH, and thus a start position of the scheduled PSSCH in time-frequency domain is not explicitly indicated in an SCI format 1-A.

### Determining of a time domain resource (slot) in NR-V2X

In NR-V2X, PSCCH/PSSCH transmission is based on a slot level, that is, only one PSCCH/PSSCH is allowed to be transmitted in one slot, and transmission of a plurality of PSCCHs/PSSCHs in one slot in a TDM manner is not supported. PSCCHs/PSSCHs between different users may be multiplexed in one slot in an FDM manner. A time domain resource of a PSSCH in NR-V2X is at a slot granularity. However, unlike in LTE-V2X where a PSSCH occupies all time domain symbols in one subframe, in NR-V2X, the PSSCH may occupy a part of symbols in one slot. This is mainly because in an LTE system, uplink or downlink transmission is performed at a subframe granularity. Therefore, sidelink transmission is also performed at a subframe granularity (a special subframe in a TDD system is not used for sidelink transmission). In an NR system, a flexible slot structure is used. To be specific, one slot includes both an uplink symbol and a downlink symbol, so that more flexible scheduling can be implemented and a delay can be reduced.

FIG. 7 is a schematic diagram of a typical subframe of an NR system. Referring to FIG. 7, a slot (such as a slot 0 or a slot 1) may include a downlink (Downlink, DL) symbol, an uplink (Uplink, UL) symbol, and a flexible (Flexible) symbol. The downlink symbol is located at a start position of the slot, the uplink symbol is located at an end position of the slot, and a flexible symbol is located between the downlink symbol and the uplink symbol. A quantity of various symbols in each slot is configurable.

A sidelink transmission system may share a carrier with a cellular system. In this case, sidelink transmission can only use an uplink transmission resource of the cellular system. For NR-V2X, if sidelink transmission is still required to occupy all time domain symbols in one slot, a network device needs to configure a slot with all uplink symbols for sidelink transmission, which greatly affects uplink and downlink data transmission in the NR system, thus reducing system performance. Therefore, in NR-V2X, a part of time domain symbols in the slot can be used for sidelink transmission, that is, a part of uplink symbols in one slot are used for sidelink transmission. In addition, an AGC symbol and a GP symbol are included in sidelink transmission. In consideration of this, if there is a relatively small quantity of uplink symbols that can be used for sidelink transmission, when the AGC symbol and the GP symbol are removed, remaining symbols that can be used to transmit valid data are few, and resource utilization is very low. Therefore, there are at least seven time domain symbols (including a GP symbol) occupied by sidelink transmission in NR-V2X. When the sidelink transmission system uses a dedicated carrier, a case of the sidelink transmission system sharing a transmission resource with another system does not exist, and all symbols in a slot may be configured for sidelink transmission.

As mentioned above, in NR-V2X, a starting point of and a length of a time domain symbol used for sidelink transmission in one slot are configured by using parameters: a start symbol position (sl-StartSymbol) and a symbol quantity (sl-LengthSymbols). The last one symbol in time domain symbols used for sidelink transmission is used as a guard period GP. Transmission of a PSSCH and a PSCCH can use only remaining time domain symbols. However, if a PSFCH transmission resource is configured in one slot, transmission of the PSSCH and the PSCCH cannot occupy a time domain symbol used for PSFCH transmission or AGC and GP symbols located before the symbol.

Similar to that in LTE-V2X, in an NR-V2X system, a time domain resource in a resource pool may also be indicated by using a bitmap (bitmap). In consideration of a flexible slot structure in the NR system, a length of the bitmap is also extended. A supported length range of the bitmap in the NR system is [10:160]. A manner of determining, by using the bitmap, a position of a slot belonging to a resource pool in one system frame number (system frame number, SFN) period in the NR system is the same as that in an LTE-V2X system, but there are differences in the following aspects.

First, a total quantity of slots included in one SFN period in the NR system is different from that in the LTE-V2X system. In the NR system, the total quantity of slots included in one SFN period is $10240 \times 2^{\mu}$, where the parameter $\mu$ is related to a value of a subcarrier spacing.

Second, in the NR system, if at least one time domain symbol in time domain symbols A, A + 1, A + 2, ..., A + B - 1 included in one slot is not configured as an uplink symbol by using signalling (such as TDD-UL-DL-ConfigCommon) of a network device, the slot cannot be used for sidelink transmission. A and B respectively represent sl-StartSymbol and sl-LengthSymbols as mentioned above.

In the NR system, a method of determining, by using a bitmap, a position of a slot belonging to a resource pool in one SFN period may include the following steps 1 to 5.

In step 1, a set of remaining slots is acquired. For example, a slot that does not belong to the resource pool in the SFN period is removed, for example, a synchronization slot and a slot that cannot be used for sidelink transmission are removed, and remaining slots may be represented as the set of remaining slots.

The remaining slots are renumbered as $(l_0, l_1, \cdots, l_{(10240 \times 2^{\mu}-N_{S\_SSB}-N_{nonSL}-1)})$, where $N_{S\_SSB}$ denotes a quantity of synchronization slots in one SFN period, and the quantity of synchronization slots may be determined based on a synchronization-related configuration parameter, for example, the quantity of synchronization slots may be related to a period for transmitting an SSB and a quantity of transmission resources configured in the period for an SSB; and $N_{nonSL}$ denotes a quantity of slots that do not meet configuration of a starting point and a quantity of uplink symbols in one SFN period. In other words, if at least one time domain symbol in the time domain symbols A, A + 1, A + 2, ..., A + B - 1 included in one slot is not semi-statically configured as an uplink symbol, the slot cannot be used for sidelink transmission, where A and B respectively represent sl-StartSymbol and sl-LengthSymbols.

In step 2, a quantity of reserved slots and corresponding time domain positions are determined.

If a quantity of slots in the set of remaining slots cannot be exactly divided by a bitmap length, a quantity of reserved slots and time domain positions of the reserved slots need to be determined. Specifically, if a number of a slot $l_r$ ($0 \le r < 10240 \times 2^{\mu} - N_{S\_SSB} - N_{nonSL}$) meets the following formula, the slot is a reserved slot.

$$r = \left\lfloor \frac{m \cdot (10240 \times 2^{\mu} - N_{S\_SSB} - N_{nonSL})}{N_{reserved}} \right\rfloor$$

In the formula, $N_{reserved} = (10240 \times 2^{\mu} - N_{S\_SSB} - N_{nonSL}) \bmod L_{bitmap}$, which denotes a quantity of reserved slots; $L_{bitmap}$ denotes the bitmap length; and $m = 0,..., N_{reserved} - 1$.

In step 3, a set of logical slots is obtained. A reserved slot is removed from the set of remaining slots, and the set of the remaining slots may be represented as the set of logical slots. All slots in the set of logical slots can be used for a resource pool. The slots in the set of logical slots are renumbered as $\left(t_0^{SL}, t_1^{SL}, \ldots, t_{T_{max}-1}^{SL}\right)$, where $T_{max} = 10240 \times 2^{\mu} - N_{S\_SSB} - N_{nonSL} - N_{reserved}$.

In step 4, a slot, belonging to the resource pool, in the set of logical slots is determined based on the bitmap.

A bitmap in resource pool configuration information is $(b_0, b_1,..., b_{L_{bitmap}-1})$. For a slot

$$t_k^{SL}\left(0 \le k < \left(10240 \times 2^{\mu} - N_{S\_SSB} - N_{nonSL} - N_{reserved}\right)\right)$$ in the set of logical slots, when $b_{k'} = 1$

is met, the slot belongs to the resource pool, where $k' = k \bmod L_{bitmap}$.

In step 5, the slot, belonging to the resource pool, determined in step 4 is renumbered sequentially as $t'^{SL}_i$ , where $i \in \{0, 1, ..., T'_{max} - 1\}$, and $T'_{max}$ denotes a quantity of slots included in the resource pool.

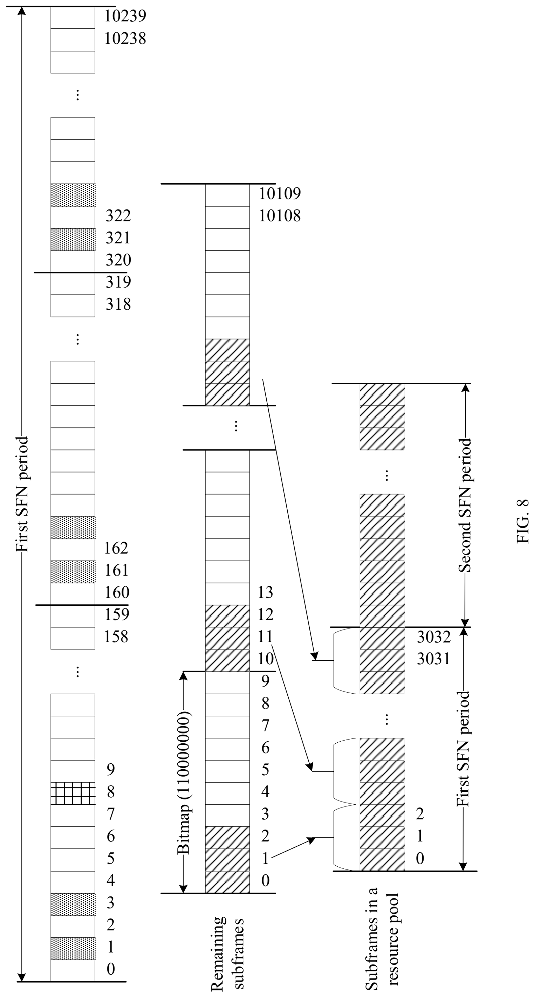

An example in which one SFN period (or DFN period) includes 10240 subframes is used for description. FIG. 8 is an example diagram in which an NR-V2X time domain resource is determined. Referring to FIG. 8, remaining subframes (as shown in the second row of FIG. 8) may be obtained by removing a subframe that does not belong to a resource pool from one SFN period. According to a bitmap, subframes belonging to the resource pool may be determined from the remaining subframes (as shown in the third row of FIG. 8).

Referring to FIG. 8, a synchronization signal period may be 160 ms, and two synchronization subframes may be included in one synchronization period. Therefore, there are 128 synchronization subframes in one SFN period. A length of a bitmap used to indicate a time domain resource in a resource pool is 10 bits. Therefore, two reserved subframes (reserved subframe) are required, and a quantity of remaining subframes is (10240 - 128 - 2 = 10110), which may be exactly divided by the length 10 of the bitmap. The remaining subframes are renumbered as 0, 1, 2, ..., 10109. If first three bits of the bitmap are represented by 1, and remaining seven bits are represented by 0, then in remaining subframes, first three subframes in every 10 subframes belong to the resource pool, and remaining subframes do not belong to the resource pool. The bitmap needs to be repeated for 1011 times in the remaining subframes to indicate whether all subframes belong to the resource pool, and three subframes are included in each bitmap period. Thus, a total of 3033 subframes in one SFN period belong to the resource pool.

## Sidelink over unlicensed spectrum (sidelink over unlicensed spectrum, SL-U)

An unlicensed spectrum is a spectrum that is classified by a country and a region and that can be used for communication of a radio device. The spectrum is generally considered as a shared spectrum, that is, a communications device in different communications systems can use the spectrum provided that a regulatory requirement set for the spectrum by the country or the region is met, and there is no need to apply for a dedicated spectrum grant to a government.

In order to enable communications systems that perform wireless communication by using an unlicensed spectrum to coexist on the spectrum, some countries or regions stipulate regulatory requirements that must be met when the unlicensed spectrum is used. For example, a communications device follows a rule of "listen before talk (listen before talk, LBT)". That is, before transmitting a signal on a channel of an unlicensed spectrum, the communications device needs to perform channel listening first, and the communications device can perform signal transmission only when a result of the channel listening is that the channel is idle, and if the result of the channel listening performed by the communications device on the channel of the unlicensed spectrum is that the channel is busy, the communications device cannot perform signal transmission. For another example, when sidelink transmission is performed on an unlicensed spectrum, the sidelink transmission needs to meet specific regulatory requirements including a minimum occupied channel bandwidth (occupied channel bandwidth, OCB) requirement and a maximum power spectral density (power spectral density, PSD) requirement. For the OCB requirement, when a terminal device performs data transmission by using a channel, an occupied channel bandwidth is not less than 80% of a bandwidth of the channel. For the maximum power spectral density requirement, a transmit power of the terminal device on every 1 MHz cannot exceed 10 dBm.

To meet the OCB and PSD regulation requirements, an interlaced resource block (interlaced resource block, IRB) structure needs to be used for sidelink transmission on an unlicensed spectrum. One IRB may include N RBs that are discrete in frequency domain, a total of M IRBs are included in a frequency band range, and RBs included in the m$^{th}$ IRB are {m, M+m, 2M+m, 3M+m, ...}.

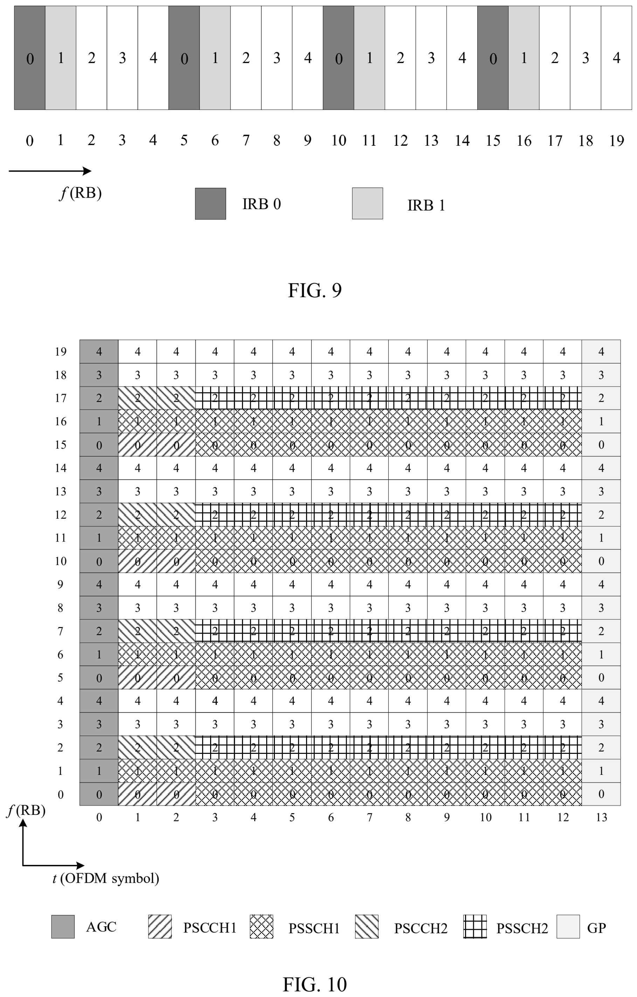

FIG. 9 is a schematic diagram of an interleaved resource block. Referring to FIG. 9, a system bandwidth includes 20 RBs, and includes 5 IRBs (that is, M = 5). Each IRB includes 4 RBs (that is, N = 4). Adjacent RBs belonging to one IRB are spaced by a same frequency domain spacing, namely, 5 RBs. The numbers in the block represent IRB indexes.

In an SL-U system, if an IRB-based resource allocation granularity is used, channels such as a PSCCH and a PSSCH in the SL-U system should be based on an IRB structure.

FIG. 10 is a schematic structural diagram of a frame based on an interleaved resource block. A frame structure in FIG. 10 includes only a PSCCH and a PSSCH, and does not include a PSFCH. The bandwidth shown in FIG. 10 includes 20 RBs, and is configured with five IRB resources, that is, M = 5. Each IRB resource includes four RBs, and numbers in the blocks represent IRB indexes.

Referring to FIG. 10, according to system configuration, the PSCCH occupies one IRB resource, and occupies two OFDM symbols in time domain. The PSSCH uses an IRB as a granularity, the first symbol in the slot is an AGC symbol, and the last symbol is a GP symbol. A PSSCH 1 occupies IRB #0 and IRB #1, and a PSCCH 1 corresponding to the PSSCH 1 occupies IRB #0. A PSSCH 2 occupies IRB #2, and a PSCCH 2 corresponding to the PSSCH 2 also occupies IRB #2.

It should be noted that, for simplicity, a resource occupied by second-stage SCI and resources occupied by a PSCCH DMRS and a PSSCH DMRS are not shown in the figure.

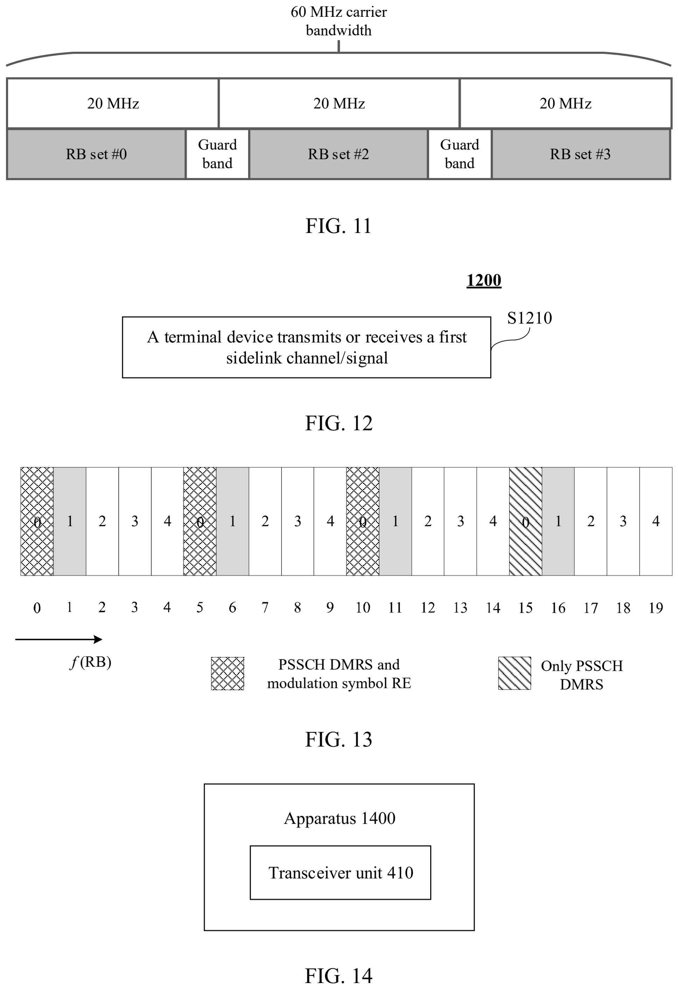

As mentioned above, on an unlicensed spectrum, a terminal device accesses a channel through LBT. In frequency domain, the LBT generally uses 20 MHz as a granularity, and every 20 MHz may be referred to as one RB set (RB set). FIG. 11 is a schematic diagram of an RB set. Referring to FIG. 11, one carrier may include a plurality of RB sets, and there is a guard period between one RB set and another RB set.

Currently, for communication based on an unlicensed resource in an NR system, an RB set is used in combination with an IRB structure. In other words, RBs in an RB set may have the IRB structure, or an RB set may include a plurality of IRBs.

Sidelink communication may be applied to a plurality of scenarios. In some scenarios, such as a scenario of smart home or a smart factory, low cost and low power consumption are extremely important for devices used for sidelink communication, such as a wearable device. For example, for a reduce capacity (reduce capacity, RedCap) terminal device widely applied to an internet of things, low cost and low power consumption are extremely important for the terminal device due to limitations such as environment, power saving, and environment protection.

However, in a sidelink communications system, currently all terminal devices support a same reception bandwidth and/or transmission bandwidth, resulting in relatively high complexity and cost of the terminal devices. How to reduce the reception bandwidth and/or transmission bandwidth of the terminal devices in the sidelink communications system is an urgent problem to be resolved.

All terminal devices supporting a same reception bandwidth and/or transmission bandwidth may refer to that, bandwidths of frequency domain resources occupied by all terminal devices in the plurality of terminal devices for receiving and/or transmitting a sidelink signal are the same, or may refer to that a bandwidth of a frequency domain resource occupied by a terminal device for receiving a radio frequency signal is the same as a bandwidth of a frequency domain resource occupied by the terminal device for receiving and/or transmitting a sidelink signal.

Therefore, to resolve the foregoing problem, an embodiment of this application provides a sidelink communication method. A bandwidth of a frequency domain resource occupied by a terminal device to transmit or receive a sidelink channel/signal and a bandwidth for the terminal device to receive a radio frequency signal in a sidelink communications system are reduced, and the bandwidth of the frequency domain resource occupied by the terminal device for transmitting or receiving the sidelink channel/signal is less than or equal to the bandwidth for the terminal device to receive the radio frequency signal, so as to reduce complexity and costs of the terminal device.

A schematic flowchart of a sidelink communication method according to an embodiment of this application is described below with reference to FIG. 12. The method shown in FIG. 12 includes step S1210.

In step S1210, a terminal device transmits or receives a first sidelink channel/signal.

In a sidelink communications system, the terminal device may implement sidelink communication based on a sidelink channel/signal. The first sidelink signal may refer to one or more of a data signal, a control signal, a synchronization signal, or another signal in sidelink communication. Correspondingly, the first sidelink channel may refer to one or more of a data channel, a control channel, a synchronization channel, or another channel respectively carrying the data signal, the control signal, the synchronization signal, or the another signal described above. The data signal may refer to the PSSCH signal described above. The control signal may refer to the PSCCH signal described above. The synchronization signal may refer to the S-SSB signal described above. Correspondingly, the data channel may refer to a channel that carries the PSSCH signal. The control channel may refer to a channel that carries the PSCCH signal. The synchronization channel may refer to a channel that carries the S-SSB signal.

To reduce costs and complexity of the terminal device in the sidelink communications system, a transmission and/or reception bandwidth of the terminal device may be reduced. The transmission and/or reception bandwidth of the terminal device may include a bandwidth of a frequency domain resource occupied by the terminal device to transmit or receive a sidelink channel/signal and a bandwidth for the terminal device to receive a radio frequency signal.

In an implementation, the bandwidth of the frequency domain resource occupied by the terminal device to transmit or receive the sidelink channel/signal or the bandwidth for the terminal device to receive the radio frequency signal may be reduced.

In another implementation, both the bandwidth of the frequency domain resource occupied by the terminal device to transmit or receive the sidelink channel/signal and the bandwidth for the terminal device to receive the radio frequency signal may be reduced. The bandwidth of the frequency domain resource occupied by the terminal device to transmit or receive the sidelink channel/signal may be the same as or different from the bandwidth for the terminal device to receive the radio frequency signal. For example, a bandwidth of a frequency domain resource occupied by the terminal device to transmit or receive the first sidelink channel/signal may be a first bandwidth (for example, the first bandwidth may refer to a sum of bandwidths of PRBs occupied by the first sidelink channel/signal), a bandwidth for the terminal device to receive a radio frequency signal may be a second bandwidth, and the first bandwidth may be the same as the second bandwidth, or may be different from the second bandwidth.

The first bandwidth may be greater than or equal to X, and the second bandwidth may be greater than or equal to Y. In an implementation, X may be less than or equal to Y, which is conductive to reducing costs and complexity of the terminal device, where X and Y are both positive numbers.

Taking into account both the implementation of sidelink communication of the terminal device and the cost reduction of the terminal device, X and Y may be determined based on one or more of the following information: a bandwidth of a frequency domain resource occupied by one S-SSB; a bandwidth of a frequency domain resource included in an IRB; a bandwidth of an IRB; or a bandwidth of one RB set.

If at least one of X or Y is greater than or equal to the bandwidth of the frequency domain resource occupied by one S-SSB, or at least one of X or Y is greater than or equal to a bandwidth of a synchronization channel, it may be ensured that a S-SSB transmitted by another terminal device can be received by the terminal device, and the terminal device may implement synchronization with the another terminal device based on the S-SSB, so as to perform sidelink communication. The bandwidth of the frequency domain resource occupied by one S-SSB may be a maximum bandwidth of a frequency domain resource occupied by one S-SSB supported by the terminal device, or may be a bandwidth of a frequency domain resource occupied by one S-SSB in a first frequency range (for example, an FR1 in a frequency range NR used for sidelink communication), for example, a maximum S-SSB bandwidth on the FR1.

If X is greater than or equal to the bandwidth of the frequency domain resource included in the IRB, it can be ensured that the terminal device can transmit the first sidelink channel/signal by occupying a minimum frequency domain resource unit in a system. The bandwidth of the frequency domain resource included in the IRB may be a maximum bandwidth of a frequency domain resource included in one IRB supported by the terminal device, for example, a maximum bandwidth of a frequency domain resource included in one IRB at a maximum subcarrier spacing (subcarrier spacing, SCS) supported by the terminal device.

If Y is greater than or equal to the bandwidth of the IRB, it may be ensured that the terminal device can transmit a radio frequency signal by occupying a minimum frequency domain resource in the system. The bandwidth of the IRB may be a maximum bandwidth between the first PRB and the last PRB of one IRB, for example, a maximum bandwidth between the first PRB and the last PRB of one IRB at a maximum subcarrier spacing SCS supported by the terminal device.

Determining X and/or Y based on the bandwidth of one RB set may include the following two cases. In one case, if at least one of X or Y is greater than or equal to the bandwidth of one RB set, it may be ensured that the terminal device can transmit and/or receive a signal in one RB set. As mentioned above, an OCB requirement needs to be met for sidelink communication over an unlicensed spectrum, that is, when the terminal device performs data transmission by using a channel, a channel bandwidth occupied by the terminal device is not less than 80% of a bandwidth of the channel. Therefore, in the other case, at least one of X or Y is greater than or equal to 80% of the bandwidth of one RB set, to meet the OCB requirement.

As mentioned above, X may be less than or equal to Y, and in an implementation, X may be less than Y. With reference to Embodiment 1 to Embodiment 4, the following describes in detail a plurality of conditions that the bandwidth of the frequency domain resource occupied by the terminal device to transmit or receive the first sidelink channel/signal and the bandwidth for the terminal device to receive the radio frequency signal may meet when X is less than Y, that is, a plurality of values of X and Y obtained when X is less than Y.

## Embodiment 1

X may be determined based on one or more of the following: a bandwidth of a frequency domain resource occupied by one S-SSB; or a bandwidth of a frequency domain resource included in an IRB.

In an implementation, X may be equal to the bandwidth of the frequency domain resource occupied by one S-SSB, which helps a terminal device receive a S-SSB signal transmitted by another terminal device, so as to implement synchronization with the another terminal device. For example, X may be equal to $1.98 \times 2^{\wedge}\mu$ MHz, where $\mu$ may be an index of the maximum subcarrier spacing supported by the terminal device. When $\mu = 0, 1, 2$, subcarrier spacings are 15 kHz, 30 kHz, 60kHz, respectively. For ease of processing, X may be an approximate value of the bandwidth ($1.98 \times 2^{\wedge}\mu$ MHz) of the frequency domain resource occupied by the S-SSB, for example, X may be equal to $2 \times 2^{\wedge}\mu$ MHz.

When $\mu$ is 0, X may be an approximate value 4 MHz of the bandwidth of the frequency domain resource occupied by the S-SSB. For example, a first bandwidth may be equal to X, that is, the first bandwidth is 4 MHz. For another example, a first bandwidth may be greater than X. Given that the lowest bandwidth of a Uu interface in NR is 5 MHz, the first bandwidth may be 5 MHz.

In another implementation, X may be equal to the bandwidth of the frequency domain resource included in the IRB, which helps the terminal device transmit a first sidelink channel or a sidelink signal by occupying a minimum frequency domain resource unit in a system. For example, X may be equal to a maximum bandwidth of a frequency domain resource included in one IRB at a maximum subcarrier spacing SCS supported by the terminal device, that is, X is equal to $A \times B \times 2^{\wedge}\mu$ MHz, where A = 11, which denotes a maximum quantity of PRBs included in one IRB; B = 0.18, which denotes a bandwidth of one PRB in a case of a subcarrier spacing being 15 kHz; and $\mu$ is an index of the maximum subcarrier spacing supported by the terminal device. In an example, $\mu = 0, 1$ correspond to subcarrier spacing 15 kHz and 30 kHz, respectively. A minimum bandwidth of the IRB is a sum of bandwidths of PRBs included in one IRB. For example, still referring to FIG. 9, a minimum bandwidth of IRB 0 may refer to a sum of bandwidths of a PRB (RB) 0, PRB 5, PRB 10, and PRB 15 included in the IRB 0. In another example, X may be equal to 2 MHz $\times 2^{\wedge}\mu$.

The foregoing describes conditions that may be met by X, and the following describes conditions that may be met by Y.

Y may be determined based on one or more of the following: a bandwidth of one RB set; or a bandwidth of an IRB.

In an implementation, Y may be equal to a bandwidth of one RB set, which helps the terminal device transmit or receive a signal in one RB set. As described above, when communication is performed by using an unlicensed spectrum, a bandwidth of one RB set is 20 MHz. Therefore, Y may be equal to 20 MHz.

In another implementation, Y may be equal to 80% of a bandwidth of one RB set, which helps the terminal device occupy 80% of a channel, to meet the OCB requirement mentioned above. For example, Y may be equal to 16 MHz (20 MHz$\times$80%).

In still another implementation, Y may be determined based on the bandwidth of the IRB. For example, Y may be equal to a maximum bandwidth between the first PRB and the last PRB of one IRB at a maximum subcarrier spacing SCS supported by the terminal device, so that the terminal device may transmit the first sidelink channel/signal by occupying the smallest IRB. In an example, Y may be equal to 18 MHz.

**Embodiment 2**

A first bandwidth may be a bandwidth of a frequency domain resource occupied by a terminal device to receive a first sidelink channel/signal, and a bandwidth of a frequency domain resource occupied by the terminal device to transmit the first sidelink channel/signal may be a third bandwidth. The third bandwidth may be greater than or equal to Z, where Z is a positive number, and $X < Z \leq Y$

In this embodiment, values of X and Y are the same as those in Embodiment 1. That is to say, in this embodiment, values of X and Y may meet one or more of a plurality of values of X and Y in Embodiment 1. For brevity, details are not described herein again.

In an implementation, Z may be determined based on one or more of the following: a bandwidth of one RB set; or a bandwidth of an IRB.

For example, Z may be equal to 80% of a bandwidth of one RB set. In an example, Y may be equal to 16 MHz (20 MHz$\times$80%). In this way, when no IRB resource configuration is employed in a resource pool, the method helps the terminal device occupy 80% of a bandwidth of one RB set, thereby meeting a requirement of a minimum channel occupied bandwidth.

For another example, Z may be determined based on the bandwidth of the IRB. For example, Z may be equal to a maximum bandwidth between the first PRB and the last PRB of one IRB at a maximum subcarrier spacing SCS supported by the terminal device. In an example, Y may be equal to 18 MHz. In this way, when an IRB resource configuration is employed in a resource pool, implementation of an IRB supported by the terminal device may be simplified.

**Embodiment 3**

The first sidelink channel/signal mentioned above may include a sidelink data channel and/or a sidelink control channel, a bandwidth for a terminal device to receive a synchronization channel or a sidelink synchronization signal block may be a fourth bandwidth. The fourth bandwidth is greater than or equal to S, where S is a positive number, and $X \leq S < Y$.

In this embodiment, values of X and Y are the same as those in Embodiment 1. That is to say, in this embodiment, values of X and Y may meet one or more of a plurality of values of X and Y in Embodiment 1. For brevity, details are not described herein again.

In an implementation, S may be determined based on one or more of the following: a bandwidth of a frequency domain resource occupied by one S-SSB in a first frequency range; or a maximum bandwidth of a frequency domain resource occupied by one S-SSB supported by the terminal device.

The first frequency range may be a frequency range used for sidelink communication in NR, for example, FR1. For example, S may be equal to a bandwidth of a frequency domain resource occupied by one S-SSB on FR1. For another example, S may be equal to a maximum bandwidth of a frequency domain resource occupied by one S-SSB on FR1. In an example, a maximum bandwidth of a frequency domain resource occupied by one S-SSB on FR1 is a S-SSB bandwidth (that is, 1.98$\times$4 MHz) in a case of a subcarrier spacing being 60 kHz, and S may be equal to 1.98$\times$4 MHz.

For example, S may be equal to a maximum bandwidth of a frequency domain resource occupied by one S-SSB supported by the terminal device. The maximum bandwidth of the frequency domain resource occupied by one S-SSB supported by the terminal device may be determined based on a maximum subcarrier spacing supported by the terminal device, that is, $S = 1.98 \text{ MHz} \times 2^{\wedge}\mu$, where $\mu$ denotes an index of the maximum subcarrier spacing supported by the terminal device, and values of $\mu$ may be 0, 1, 2, which correspond to subcarrier spacings of 15 kHz, 30 kHz, 60 kHz, respectively.

According to the method provided in this embodiment, it can be ensured that the terminal device can receive an S-SSB, to implement synchronization with another terminal device. In addition, according to the method provided in this embodiment, a capability (namely, bandwidth) of the terminal device to receive a data channel and a control channel can be minimized, so as to minimize costs and design complexity of the terminal device.

**Embodiment 4**

The first sidelink channel/signal mentioned above may include a sidelink data channel and/or a sidelink control channel, and a bandwidth of a frequency domain resource occupied by the terminal device to transmit or receive another sidelink channel/signal different from the first sidelink channel/signal is greater than or equal to Y. In this way, the method provided in this embodiment helps the terminal device and another terminal device coexist in a same resource pool.

In this embodiment, values of X and Y are the same as those in Embodiment 1. That is to say, in this embodiment, values of X and Y may meet one or more of a plurality of values of X and Y in Embodiment 1. For brevity, details are not described herein again.

As mentioned above, X may be less than or equal to Y, and in an implementation, X may be equal to Y. With reference to Embodiment 5, the following describes in detail conditions that the bandwidth of the frequency domain resource occupied by the terminal device to transmit or receive the first sidelink channel/signal and the bandwidth for the terminal device to receive the radio frequency signal may meet when X is equal to Y, that is, a plurality of values of X and Y obtained when X is equal to Y.

**Embodiment 5**

Y may be determined based on one or more of the following: a bandwidth of one RB set; or a maximum bandwidth of a frequency domain resource occupied by one S-SSB supported by the terminal device.

For example, Y may be equal to the bandwidth of one RB set. In an example, Y may be equal to 20 MHz.

For another example, Y is greater than or equal to a maximum bandwidth of a frequency domain resource occupied by one S-SSB supported by the terminal device, and Y is less than a bandwidth of one RB set, which helps the terminal device receive a S-SSB signal transmitted by another terminal device, so as to implement synchronization with the another terminal device. In an example, $1.98 \times 2^{\mu}$ MHz $\leq$ Y $<$ 20 MHz, where $\mu$ is an index of the maximum subcarrier spacing supported by a UE, and $\mu$ = 0, 1, 2 correspond to subcarrier spacings of 15 kHz, 30 kHz, 60 kHz, respectively.

In the method provided in this embodiment, a bandwidth of a frequency domain resource occupied by a terminal device to transmit or receive a first sidelink channel/signal is the same as a bandwidth for the terminal device to receive a radio frequency signal, which helps reduce implementation complexity.

It should be noted that, in this embodiment, values of X and Y are the same. For a value of X, refer to the value of Y.

It should be noted that, the first bandwidth mentioned above may be a baseband bandwidth used by the terminal device to transmit or receive the first sidelink channel/signal.

In a sidelink communications system, by using the method in the foregoing embodiment of this application, costs and complexity of a terminal device can be reduced, and coexistence between the terminal device and another terminal device on an unlicensed spectrum can be further implemented.

However, a bandwidth of one IRB in a resource pool in which the terminal device currently operates may be greater than a bandwidth of a frequency domain resource occupied by the terminal device to transmit or receive the first sidelink channel/signal. The following describes a method for implementing sidelink communication of the terminal device in this case.

As mentioned above, in NR-V2X, a part of time domain symbols in the slot can be used for sidelink transmission, that is, a part of uplink symbols in one slot are used for sidelink transmission. Therefore, when a bandwidth of one IRB in a resource pool in which the terminal device currently operates may be greater than a bandwidth of a frequency domain resource occupied by the terminal device to transmit or receive the first sidelink channel/signal, in an implementation, the terminal device may occupy part of PRBs in one IRB in the resource pool in which the terminal device currently operates to transmit the first sidelink channel/signal. For example, the terminal device may occupy part of PRBs with the lowest index value in the IRB to transmit the first sidelink channel/signal, or may occupy part of PRBs with the highest index value in the IRB to transmit the first sidelink channel/signal.

In another implementation, the terminal device may occupy part of PRBs in one IRB in a resource pool in which the terminal device currently operates to receive the first sidelink channel/signal. For example, the terminal device may occupy part of PRBs with the lowest index value in the IRB to receive the first sidelink channel/signal, or may occupy part of PRBs with the highest index value in the IRB to receive the first sidelink channel/signal.

To ensure the resource selection based on channel listening in the foregoing case, a DMRS of a sidelink data channel PSSCH transmitted to the terminal device may occupy PRBs in an entire IRB, and an RE that carries a modulation symbol in the PSSCH may occupy only part of PRBs in the IRB, so as to ensure that a bandwidth occupied by the RE that carries the modulation symbol in the transmitted PSSCH does not exceed a bandwidth of a receiving terminal device.

FIG. 13 is an example diagram of a use case of one IRB resource according to an embodiment of this application, that is, an example diagram of using an IRB 0 resource in FIG. 13. Referring to FIG. 13, the IRB 0 includes four PRBs (that is, PRBs whose index number is 0). If a receiving terminal device can receive only three PRBs, when transmitting a PSSCH, the terminal device may transmit modulation symbols by using only three PRBs with the lowest index in an IRB, and a DMRS of the PSSCH may be transmitted only in the last PRB.

It should be noted that, when X is equal to a bandwidth of a frequency domain resource included in the IRB, the terminal device expects that one sub-channel in the resource pool includes only one IRB, and any PSCCH in the resource pool occupies only part of or all of the IRB.

The foregoing describes in detail how to reduce a transmission bandwidth and a reception bandwidth of a terminal device. The following describes how to request a resource and how to determine a reception bandwidth of a receiving UE when a terminal device performs sidelink communication.

In an implementation, if a terminal device performs sidelink communication with another terminal device in a specific resource pool, the terminal device may report, to another terminal device communicating with the terminal device (for example, reporting by using signalling), a transmission bandwidth and a reception bandwidth that can be supported, and the another terminal device may transmit a sidelink channel or a sidelink signal to the terminal device based on the reception bandwidth that can be supported by the terminal device.

In an implementation, if a transmission resource of the terminal device is allocated by a base station in a current resource pool, the terminal device may at least report, to the base station by using signalling, a transmission bandwidth that can be supported, so that the base station can allocate a sidelink resource to the terminal device based on the bandwidth that can be supported by the terminal device. When another terminal device that transmits a sidelink channel or a sidelink signal to the terminal device requests a resource from a base station, the another terminal device should report a maximum frequency domain bandwidth of the requested resource to the base station. In some cases, the terminal device may alternatively report the reception bandwidth that can be supported to the base station.

As mentioned above, the transmission and/or reception bandwidth of the terminal device may include a bandwidth of a frequency domain resource occupied by the terminal device to transmit or receive a sidelink channel/signal and a bandwidth for the terminal device to receive a radio frequency signal. Therefore, the terminal device may report, to the base station or to another terminal device, one or more of the bandwidth of the frequency domain resource occupied by the terminal device to transmit or receive the sidelink channel/signal or the bandwidth for the terminal device to receive the radio frequency signal.

In an implementation, the terminal device may directly indicate, in report information, the bandwidth of the frequency domain resource occupied by the terminal device to transmit or receive the sidelink channel/signal and the bandwidth for the terminal device to receive the radio frequency signal.

In another implementation, the terminal device may indirectly indicate, in report information, the bandwidth of the frequency domain resource occupied by the terminal device to transmit or receive the sidelink channel/signal and the bandwidth for the terminal device to receive the radio frequency signal. For example, the terminal device may indicate, in the report information, a type of the terminal device to which the terminal device belongs, and a bandwidth of a frequency domain resource supported and occupied by the terminal device of the type to transmit or receive the sidelink channel/signal and a bandwidth for the terminal device to receive a radio frequency signal may be defined by a standard, predefined, or pre-configured.

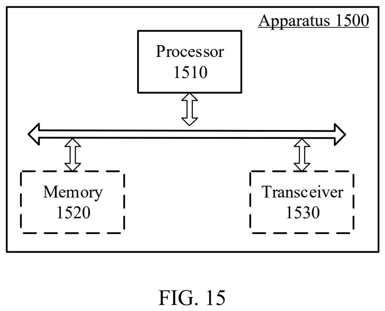

The method embodiments of this application are described above in detail with reference to FIG. 1 to FIG. 13. Apparatus embodiments of this application are described below in detail with reference to FIG. 14 and FIG. 15. It should be understood that the description of the apparatus embodiments corresponds to the description of the method embodiments. Therefore, for parts that are not described in detail, one may refer to the foregoing method embodiments.

FIG. 14 is a schematic diagram of a sidelink communication apparatus according to an embodiment of this application. The apparatus shown in FIG. 14 may be a terminal device, and the apparatus 1400 may include a transceiver unit 1410.

The transceiver unit 1410 is configured to transmit or receive a first sidelink channel/signal, where a bandwidth of a frequency domain resource occupied by the terminal device to transmit or receive the first sidelink channel/signal is a first bandwidth, a bandwidth for the terminal device to receive a radio frequency signal is a second bandwidth, the first bandwidth is greater than or equal to X, the second bandwidth is greater than or equal to Y, both the X and the Y are positive numbers, and the X is less than or equal to the Y.

In a possible implementation, the X is less than the Y.

In a possible implementation, the X is determined based on one or more of the following: a bandwidth of a frequency domain resource occupied by one S-SSB; or a bandwidth of a frequency domain resource included in an IRB.

In a possible implementation, the X is equal to a bandwidth of a frequency domain resource occupied by one S-SSB.

In a possible implementation, the X is equal to a maximum bandwidth of a frequency domain resource included in one IRB at a maximum subcarrier spacing SCS supported by the terminal device.

In a possible implementation, the first bandwidth is a bandwidth of a frequency domain resource occupied by the terminal device to receive the first sidelink channel/signal, and a bandwidth of a frequency domain resource occupied by the terminal device to transmit the first sidelink channel/signal is a third bandwidth, and the third bandwidth is greater than or equal to Z, where Z is a positive number and $X < Z \leq Y$

In a possible implementation, the Z is determined based on one or more of the following: a bandwidth of one RB set; or a bandwidth of an IRB.

In a possible implementation, the Z is equal to 80% of a bandwidth of one RB set; or the Z is equal to a maximum bandwidth between the first PRB and the last PRB of one IRB at a maximum subcarrier spacing SCS supported by the terminal device.

In a possible implementation, the first sidelink channel/signal includes a sidelink data channel and/or a sidelink control channel, a bandwidth for the terminal device to receive a sidelink synchronization signal block is a fourth bandwidth, and the fourth bandwidth is greater than or equal to S, where S is a positive number and $X \leq S < Y$

In a possible implementation, the S is determined based on one or more of the following: a bandwidth of a frequency domain resource occupied by one S-SSB in a first frequency range; or a maximum bandwidth of a frequency domain resource occupied by one S-SSB supported by the terminal device.

In a possible implementation, the first sidelink channel/signal includes a sidelink data channel and/or a sidelink control channel, and a bandwidth of a frequency domain resource occupied by the terminal device to transmit or receive another sidelink channel/signal different from the first sidelink channel/signal is greater than or equal to Y.

In a possible implementation, the Y is determined based on one or more of the following: a bandwidth of one RB set; or a bandwidth of an IRB.

In a possible implementation, the Y is equal to a bandwidth of one RB set; the Y is equal to 80% of a bandwidth of one RB set; or the Y is equal to a maximum bandwidth between the first PRB and the last PRB of one IRB at a maximum subcarrier spacing SCS supported by the terminal device.

In a possible implementation, the X is equal to the Y.

In a possible implementation, the Y is determined based on one or more of the following: a bandwidth of one RB set; or a maximum bandwidth of a frequency domain resource occupied by one S-SSB supported by the terminal device.

In a possible implementation, the Y is equal to a bandwidth of one RB set; or the Y is greater than or equal to a maximum bandwidth of a frequency domain resource occupied by one S-SSB supported by the terminal device, and the Y is less than a bandwidth of one RB set.

In a possible implementation, the first bandwidth is a baseband bandwidth for the terminal device to transmit or receive the first sidelink channel/signal.

FIG. 15 is a schematic structural diagram of another sidelink communication apparatus according to an embodiment of this application. Dashed lines in FIG. 15 indicate that a unit or module is optional. The apparatus 1500 may be configured to implement the methods described in the foregoing method embodiments. The apparatus 1500 may be a chip or a terminal device.

The apparatus 1500 may include one or more processors 1510. The processor 1510 may support the apparatus 1500 in implementing the methods described in the foregoing method embodiments. The processor 1510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1500 may further include one or more memories 1520. The memory 1520 stores a program, and the program may be executed by the processor 1510, to cause the processor 1510 to execute the methods described in the foregoing method embodiments. The memory 1520 may be separated from or integrated into the processor 1510.

The apparatus 1500 may further include a transceiver 1530. The processor 1510 may communicate with another device or chip by using the transceiver 1530. For example, the processor 1510 may transmit data to and receive data from another device or chip by using the transceiver 1530.

An embodiment of this application further provides a computer-readable storage medium for storing a program. The computer-readable storage medium may be applied to the terminal device provided in embodiments of this application, and the program causes a computer to execute the methods performed by the terminal device in various embodiments of this application.

An embodiment of this application further provides a computer program product. The computer program product includes a program. The computer program product may be applied to the terminal device provided in embodiments of this application, and the program causes a computer to execute the methods performed by the terminal device in various embodiments of this application.

An embodiment of this application further provides a computer program. The computer program may be applied to the terminal device provided in embodiments of this application, and the computer program causes a computer to execute the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In the embodiments of this application, the "include" may refer to direct inclusion, or may refer to indirect inclusion. Optionally, the term "include" mentioned in the embodiments of this application may be replaced with "indicate" or "be used to determine". For example, A including B may be replaced with that A indicates B, or A is used to determine B.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink communication method, comprising:
transmitting or receiving, by a terminal device, a first sidelink channel/signal, wherein a bandwidth of a frequency domain resource occupied by the terminal device to transmit or receive the first sidelink channel/signal is a first bandwidth, a bandwidth for the terminal device to receive a radio frequency signal is a second bandwidth, the first bandwidth is greater than or equal to X, the second bandwidth is greater than or equal to Y, both the X and the Y are positive numbers, and the X is less than or equal to the Y.

2. The method according to claim 1, wherein the X is less than the Y.

3. The method according to claim 2, wherein the X is determined based on one or more of following:

    a bandwidth of a frequency domain resource occupied by one S-SSB; or
    a bandwidth of a frequency domain resource comprised in an IRB.

4. The method according to claim 2 or 3, wherein the X is equal to a bandwidth of a frequency domain resource occupied by one S-SSB.

5. The method according to claim 2 or 3, wherein the X is equal to a maximum bandwidth of a frequency domain resource comprised in one IRB at a maximum subcarrier spacing SCS supported by the terminal device.

6. The method according to any one of claims 2 to 5, wherein the first bandwidth is a bandwidth of a frequency domain resource occupied by the terminal device to receive the first sidelink channel/signal, and a bandwidth of a frequency domain resource occupied by the terminal device to transmit the first sidelink channel/signal is a third bandwidth, and the third bandwidth is greater than or equal to Z, wherein Z is a positive number and $X < Z \leq Y$.

7. The method according to claim 6, wherein the Z is determined based on one or more of following:

    a bandwidth of one RB set; or
    a bandwidth of an IRB.

8. The method according to claim 6 or 7, wherein the Z is equal to 80% of a bandwidth of one RB set; or the Z is equal to a maximum bandwidth between a first PRB and a last PRB of one IRB at a maximum subcarrier spacing SCS supported by the terminal device.

9. The method according to any one of claims 2 to 8, wherein the first sidelink channel/signal comprises a sidelink data channel and/or a sidelink control channel, a bandwidth for the terminal device to receive a sidelink synchronization signal block is a fourth bandwidth, and the fourth bandwidth is greater than or equal to S, wherein S is a positive number and $X \leq S < Y$.

10. The method according to claim 9, wherein the S is determined based on one or more of following:

    a bandwidth of a frequency domain resource occupied by one S-SSB in a first frequency range; or
    a maximum bandwidth of a frequency domain resource occupied by one S-SSB supported by the terminal device.

11. The method according to any one of claims 2 to 8, wherein the first sidelink channel/signal comprises a sidelink data channel and/or a sidelink control channel, and a bandwidth of a frequency domain resource occupied by the terminal device to transmit or receive another sidelink channel/signal different from the first sidelink channel/signal is greater than or equal to Y.

12. The method according to any one of claims 2 to 11, wherein the Y is determined based on one or more of following:

a bandwidth of one RB set; or
a bandwidth of an IRB.

13. The method according to claim 12, wherein the Y is equal to a bandwidth of one RB set; the Y is equal to 80% of a bandwidth of one RB set; or the Y is equal to a maximum bandwidth between a first PRB and a last PRB of one IRB at a maximum subcarrier spacing SCS supported by the terminal device.

14. The method according to claim 1, wherein the X is equal to the Y.

15. The method according to claim 14, wherein the Y is determined based on one or more of following:

a bandwidth of one RB set; or
a maximum bandwidth of a frequency domain resource occupied by one S-SSB supported by the terminal device.

16. The method according to claim 14 or 15, wherein the Y is equal to a bandwidth of one RB set; or the Y is greater than or equal to a maximum bandwidth of a frequency domain resource occupied by one S-SSB supported by the terminal device, and the Y is less than a bandwidth of one RB set.

17. The method according to any one of claims 1 to 16, wherein the first bandwidth is a baseband bandwidth for the terminal device to transmit or receive the first sidelink channel/signal.

18. A sidelink communications apparatus, wherein the apparatus is a terminal device and comprises:
a transceiver unit, configured to transmit or receive a first sidelink channel/signal, wherein a bandwidth of a frequency domain resource occupied by the terminal device to transmit or receive the first sidelink channel/signal is a first bandwidth, a bandwidth for the terminal device to receive a radio frequency signal is a second bandwidth, the first bandwidth is greater than or equal to X, the second bandwidth is greater than or equal to Y, both the X and the Y are positive numbers, and the X is less than or equal to the Y.

19. The apparatus according to claim 18, wherein the X is less than the Y.

20. The apparatus according to claim 19, wherein the X is determined based on one or more of the following:

a bandwidth of a frequency domain resource occupied by one S-SSB; or
a bandwidth of a frequency domain resource comprised in an IRB.

21. The apparatus according to claim 19 or 20, wherein the X is equal to a bandwidth of a frequency domain resource occupied by one S-SSB.

22. The apparatus according to claim 19 or 20, wherein the X is equal to a maximum bandwidth of a frequency domain resource comprised in one IRB at a maximum subcarrier spacing SCS supported by the terminal device.

23. The apparatus according to any one of claims 19 to 22, wherein the first bandwidth is a bandwidth of a frequency domain resource occupied by the terminal device to receive the first sidelink channel/signal, and a bandwidth of a frequency domain resource occupied by the terminal device to transmit the first sidelink channel/signal is a third bandwidth, and the third bandwidth is greater than or equal to Z, wherein Z is a positive number and $X < Z \leq Y$.

24. The apparatus according to claim 23, wherein the Z is determined based on one or more of following:

a bandwidth of one RB set; or
a bandwidth of an IRB.

25. The apparatus according to claim 23 or 24, wherein the Z is equal to 80% of a bandwidth of one RB set; or the Z is equal to a maximum bandwidth between a first PRB and a last PRB of one IRB at a maximum subcarrier spacing SCS supported by the terminal device.

26. The apparatus according to any one of claims 19 to 25, wherein the first sidelink channel/signal comprises a sidelink data channel and/or a sidelink control channel, a bandwidth for the terminal device to receive a sidelink synchronization signal block is a fourth bandwidth, and the fourth bandwidth is greater than or equal to S, wherein S is a positive number and $X \leq S < Y$.

27. The apparatus according to claim 26, wherein the S is determined based on one or more of following:

    a bandwidth of a frequency domain resource occupied by one S-SSB in a first frequency range; or
    a maximum bandwidth of a frequency domain resource occupied by one S-SSB supported by the terminal device.

28. The apparatus according to any one of claims 19 to 25, wherein the first sidelink channel/signal comprises a sidelink data channel and/or a sidelink control channel, and a bandwidth of a frequency domain resource occupied by the terminal device to transmit or receive another sidelink channel/signal different from the first sidelink channel/signal is greater than or equal to Y.

29. The apparatus according to any one of claims 19 to 28, wherein the Y is determined based on one or more of following:

    a bandwidth of one RB set; or
    a bandwidth of an IRB.

30. The apparatus according to claim 29, wherein the Y is equal to a bandwidth of one RB set; the Y is equal to 80% of a bandwidth of one RB set; or the Y is equal to a maximum bandwidth between a first PRB and a last PRB of one IRB at a maximum subcarrier spacing SCS supported by the terminal device.

31. The apparatus according to claim 18, wherein the X is equal to the Y.

32. The apparatus according to claim 31, wherein the Y is determined based on one or more of following:

    a bandwidth of one RB set; or
    a maximum bandwidth of a frequency domain resource occupied by one S-SSB supported by the terminal device.

33. The apparatus according to claim 31 or 32, wherein the Y is equal to a bandwidth of one RB set; or the Y is greater than or equal to a maximum bandwidth of a frequency domain resource occupied by one S-SSB supported by the terminal device, and the Y is less than a bandwidth of one RB set.

34. The apparatus according to any one of claims 18 to 33, wherein the first bandwidth is a baseband bandwidth for the terminal device to transmit or receive the first sidelink channel/signal.

35. A terminal device, comprising a transceiver, a memory, and a processor, wherein the memory is configured to store a program, and the processor is configured to invoke the program in the memory to cause the transceiver to execute the method according to any one of claims 1 to 17.

36. An apparatus, comprising a processor, configured to invoke a program from a memory to execute the method according to any one of claims 1 to 17.

37. A chip, comprising a processor, configured to invoke a program from a memory to cause a device installed with the chip to execute the method according to any one of claims 1 to 17.

38. A computer-readable storage medium, wherein the computer-readable storage medium stores a program, and the program causes a computer to execute the method according to any one of claims 1 to 17.

39. A computer program product, comprising a program that causes a computer to execute the method according to any one of claims 1 to 17.

40. A computer program, wherein the computer program causes a computer to execute the method according to any one of claims 1 to 17.

FIG. 1

Start symbol

Symbol length

Frequency

Time

0  1  2  3  4  5  6  7  8  9  10  11  12  13

PSCCH    PSSCH    PSFCH    GP    Symbol unavailable for sidelink

FIG. 2

| AGC | DMRS | PSSCH | DMRS | PSSCH | DMRS | PSSCH | GP | AGC for receiving a PSFCH | PSFCH | GP |
|------|------|-------|------|-------|------|-------|-----|-----|-----|-----|
|     | PSCCH |      |      |       |      |       |     |     |     |     |

**FIG. 3**

| AGC | DMRS | PSCCH | DMRS | DMRS | DMRS | GAP |
|-----|------|-------|------|------|------|-----|

0  1  2  3  4  5  6  7  8  9  10  11  12  13

**FIG. 4**

RE #0  RE #1  RE #2  RE #3  RE #4  RE #5  RE #6  RE #7  RE #8  RE #9  RE #10  RE #11

| Port 0/ Port 1 | | Port 0/ Port 1 | | Port 0/ Port 1 | | Port 0/ Port 1 | | Port 0/ Port 1 | | Port 0/ Port 1 | |

**FIG. 5**

FIG. 6

FIG. 7

FIG. 8

**FIG. 9**

**FIG. 10**

60 MHz carrier
bandwidth

| 20 MHz | 20 MHz | 20 MHz |
|--------|--------|--------|

| RB set #0 | Guard band | RB set #2 | Guard band | RB set #3 |
|-----------|------------|-----------|------------|-----------|

FIG. 11

**1200**

A terminal device transmits or receives a first
sidelink channel/signal — S1210

FIG. 12

| 0 | 1 | 2 | 3 | 4 | 0 | 1 | 2 | 3 | 4 | 0 | 1 | 2 | 3 | 4 | 0 | 1 | 2 | 3 | 4 |
|---|---|---|---|---|---|---|---|---|---|---|---|---|---|---|---|---|---|---|---|

0  1  2  3  4  5  6  7  8  9  10  11  12  13  14  15  16  17  18  19

$f$(RB)

PSSCH DMRS and
modulation symbol RE

Only PSSCH
DMRS

FIG. 13

Apparatus 1400

Transceiver unit 410

FIG. 14

FIG. 15

## INTERNATIONAL SEARCH REPORT

International application No.

**PCT/CN2023/088529**

| A. | CLASSIFICATION OF SUBJECT MATTER |
| --- | --- |

H04W 72/40(2023.01)i; H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC:H04W72/-

Documentation searched other than minimum documentation to the extent that such documents are included in the fields searched

Electronic data base consulted during the international search (name of data base and, where practicable, search terms used)

CNTXT: CNABS; CNKI: 设备, 终端, UE, 侧链路, PC5, 侧行, side-link, sidelink, SL, 副链路, 边链路, DL, downlink, 下行, UU, 带宽, BW+, 大小, 大于, 不小于, 最小, 等于, 相等, 相同, +SSB, 同步, IRB, RB, PRB; VEN: USTXT; EPTXT; WOTXT; 3GPP: UE, terminal, PC5, side-link, sidelink, SL, DL, downlink, UU, RF, BW+, bandwidth, size, larger, min+, less, same, equal, +SSB, IRB, RB, PRB

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112314029 A (NTT DOCOMO INC.) 02 February 2021 (2021-02-02) description, paragraphs [0085]-[0139], and figures 11A-16 | 1-2, 14, 17-19, 31, 34-40 |
| X | CN 114946238 A (QUALCOMM INC.) 26 August 2022 (2022-08-26) paragraphs [0070]-[0107] | 1-2, 14, 17-19, 31, 34-40 |
| X | CN 112956264 A (HUAWEI TECHNOLOGIES CO., LTD.) 11 June 2021 (2021-06-11) paragraphs [0112]-[0116] | 1-2, 14, 17-19, 31, 34-40 |
| A | WO 2020130625 A1 (LG ELECTRONICS INC.) 25 June 2020 (2020-06-25) entire document | 1-40 |
| A | US 2021014831 A1 (SAMSUNG ELECTRONICS CO., LTD.) 14 January 2021 (2021-01-14) entire document | 1-40 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 January 2024** | **08 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/088529**

**C.    DOCUMENTS CONSIDERED TO BE RELEVANT**

| Category* | Citation of document, with indication, where appropriate, of the relevant passages | Relevant to claim No. |
|---|---|---|
| A | SPREADTRUM COMMUNICATIONS. "Discussion on synchronization mechanism for NR V2X" <br> *3GPP TSG RAN WG1 Meeting #96bis R1-1904792*, 02 April 2019 (2019-04-02), <br> entire document | 1-40 |

Form PCT/ISA/210 (second sheet) (July 2022)

**INTERNATIONAL SEARCH REPORT**
Information on patent family members

International application No.

**PCT/CN2023/088529**

| Patent document cited in search report | | | Publication date (day/month/year) | Patent family member(s) | | | Publication date (day/month/year) |
|---|---|---|---|---|---|---|---|
| CN | 112314029 | A | 02 February 2021 | WO | 2020008539 | A1 | 09 January 2020 |
| | | | | EP | 3820210 | A1 | 12 May 2021 |
| | | | | EP | 3820210 | A4 | 16 February 2022 |
| | | | | JP | WO2020008539 | A1 | 15 July 2021 |
| | | | | JP | 2022153447 | A | 12 October 2022 |
| | | | | JP | 7364749 | B2 | 18 October 2023 |
| | | | | US | 2021160876 | A1 | 18 October 2023 |
| CN | 114946238 | A | 26 August 2022 | US | 2021227504 | A1 | 22 July 2021 |
| | | | | US | 11770799 | B2 | 26 September 2023 |
| | | | | EP | 4094503 | A1 | 30 November 2022 |
| | | | | WO | 2021150634 | A1 | 29 July 2021 |
| | | | | IN | 202247034905 | A | 22 July 2022 |
| CN | 112956264 | A | 11 June 2021 | US | 2020146010 | A1 | 07 May 2020 |
| | | | | US | 11109378 | B2 | 31 August 2021 |
| | | | | EP | 3861814 | A1 | 11 August 2021 |
| | | | | EP | 3861814 | A4 | 22 December 2021 |
| | | | | WO | 2020088369 | A1 | 07 May 2020 |
| | | | | IN | 202147021126 | A | 11 June 2021 |
| | | | | VN | 80094 | A | 25 August 2021 |
| WO | 2020130625 | A1 | 25 June 2020 | KR | 20200075772 | A | 26 June 2020 |
| | | | | KR | 102207128 | B1 | 25 January 2021 |
| | | | | US | 2021306984 | A1 | 30 September 2021 |
| US | 2021014831 | A1 | 14 January 2021 | WO | 2021006672 | A1 | 14 January 2021 |
| | | | | EP | 3984304 | A1 | 20 April 2022 |
| | | | | EP | 3984304 | A4 | 22 June 2022 |
| | | | | US | 11553458 | B2 | 10 January 2023 |
| | | | | KR | 20210006836 | A | 19 January 2021 |
| | | | | CN | 114080845 | A | 22 February 2022 |

Form PCT/ISA/210 (patent family annex) (July 2022)